(19) Europäisches Patentamt / European Patent Office / Office européen des brevets

(11) EP 2 412 770 A1

(12) # EUROPEAN PATENT APPLICATION

published in accordance with Art. 153(4) EPC

(43) Date of publication:
**01.02.2012 Bulletin 2012/05**

(21) Application number: **10755997.3**

(22) Date of filing: **19.03.2010**

(51) Int Cl.:
***C09D 165/00*** $^{(2006.01)}$ ***B05D 5/12*** $^{(2006.01)}$
***C09D 5/24*** $^{(2006.01)}$ ***C09D 7/12*** $^{(2006.01)}$

(86) International application number:
**PCT/JP2010/054786**

(87) International publication number:
**WO 2010/110200 (30.09.2010 Gazette 2010/39)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.03.2009 JP 2009072804**
**25.03.2009 JP 2009073393**

(71) Applicant: **Sanyo Chemical Industries, Ltd.**
**Kyoto-shi**
**Kyoto 605-0995 (JP)**

(72) Inventors:
- **OTAKA, Takeshi**
  **Kyoto-shi**
  **Kyoto 605-0995 (JP)**
- **KANDA, Yoichi**
  **Kyoto-shi**
  **Kyoto 605-0995 (JP)**
- **MAYAJIMA, Toru**
  **Kyoto-shi**
  **Kyoto 605-0995 (JP)**

(74) Representative: **Vossius & Partner**
**Siebertstrasse 4**
**81675 München (DE)**

(54) **ELECTROCONDUCTIVE COATING COMPOSITION AND PROCESS FOR PRODUCTION OF ELECTROCONDUCTIVE COATING FILM**

(57) Provided is an electroconductive coating composition which is soluble in solvent and exhibits excellent processability, and the electric conductivity of which rarely lowers even under high temperature conditions. An electroconductive coating composition (A) **characterized by** containing both a substituted polythiophene (P) and a dopant (D), said substituted polythiophene (P) being a polythiophene in which at least some of the thiophene repeating unit are each a thiophene repeating unit ($\alpha$) which is substituted at the 3-position and/or the 4-position of a thiophene ring by (a) a polyether group that comprises 1 to 9 C2-4 oxyalkylene group repeating units and that has a C1-15 alkoxy group at one terminal, (b) an alkoxy group, (c) an alkoxyalkyl group, or (d) an alkyl group that is substituted or unsubstituted by the polyether group (a).

EP 2 412 770 A1

## Description

TECHNICAL FIELD

The present invention relates to electroconductive coating compositions. Particularly, it relates to an electroconductive coating composition comprising an electroconductive polymer and a dopant.

BACKGROUND ART

Electroconductive polymers, such as polyaniline, polythiophene, and polypyrrole, have been expected to be utilized because they are superior in stability and electrical conductivity, but their application fields have heretofore been limited because such electroconductive polymers are insoluble in solvents and poor in formability.

In the field of capacitors, for the purpose of reducing impedance in a high frequency region, there have been used electroconductive polymer capacitors in which an oxidized coating of aluminum, tantalum, niobium, or the like (dielectric coating) has been converted into a porous coating film by etching, and on a surface of the coating a layer of an electroconductive polymer such as polypyrrole and polythiophene (electroconductive polymer layer) has been formed to form a cathode.

As the method for forming the electroconductive polymer layer, there has been used a method in which a dispersion liquid containing a precursor monomer of the electroconductive polymer is applied to a surface of the porous coating and then the precursor monomer is polymerized. As a method of the polymerization, chemical polymerization such as that disclosed in Patent Document 1 has mainly been used.

However, since the concentration of a dispersion liquid is low in chemical polymerization like that disclosed in Patent Document 1, polymerization must be repeated 10 times or more in order to achieve a thickness of a needed coating film, and also there is a problem, for example, that a polymerization time is long. Therefore, such polymerization has a problem that the production efficiency of capacitors is very low. As a method of solving this problem, there has been disclosed a method of dissolving a polypyrrole, which is an electroconductive polymer, in a solvent with the use of dodecylbenzenesulfonic acid (DBSA) as a dopant (see, for example, Patent Document 2).

However, since electroconductive polymers produced by the method disclosed in Patent Document 2 are not real solutions but dispersions, they do not impregnate sufficiently into coating films with fine pores therein, resulting in a problem that the capacitance of capacitors cannot be increased efficiently.

Needs for flexibilization of electronic materials have recently grown, and application of electroconductive polymers such as polyaniline, polythiophene and polypyrrole to electroconductive functional materials, charge transporting materials, and optical functional materials is being studied actively. Especially, electroconductive functional materials have been put in practical use as electrolytes for solid electrolytic capacitors or antistatic agents. In order to expand the practicality of such electroconductive polymers, it is urgent to improve their electrical conductivity and processability and to improve the environmental stability, such as heat resistance and moisture resistance, of electroconductive coating films to be obtained. Particularly, it is known that the electrical conductivity of electroconductive coating films will deteriorate due to disincorporation of a dopant caused by long-time heating or other causes.

As a method for obtaining an electroconductive coating film with improved heat resistance, a method of hybridizing an organic sulfonic acid compound as a dopant and heat stabilizer with an electroconductive polymer has heretofore been proposed. For example, Patent Document 3 discloses a method of forming an electroconductive coating film by polymerizing precursor monomers of a polythiophene with mixing of an aromatic sulfonic acid compound thereto. However, the method disclosed in Patent Document 3 has a problem with respect to processability because there is no appropriate good solvent of electroconductive polymers obtained thereby.

PRIOR ART DOCUMENTS

PATENT DOCUMENTS

[Patent Document 1] JP 63-173313 A
[Patent Document 2] JP 10-507225 T
[Patent Document 3] JP 7-238149 A

## SUMMARY OF THE INVENTION

## PROBLEMS TO BE SOLVED BY THE INVENTION

The present invention was devised in view of the above-mentioned problems, and the purpose of the present invention is to provide an electroconductive coating composition that is soluble in solvents and superior in processability and that develops only a small, if any, decrease in electrical conductivity even under high temperature conditions.

## MEANS FOR SOLVING THE PROBLEMS

The present inventors have reached the present invention as a result of earnestly performing investigations in order to attain the above-mentioned object.
That is, the present invention is directed to an electroconductive coating composition (A) comprising a substituted polythiophene (P) and a dopant (D), said substituted polythiophene (P) having thiophene repeating units at least some of which are each a thiophene repeating unit ($\alpha$) substituted at the 3-position and/or the 4-position of its thiophene ring with (a) a polyether group that comprises 1 to 9 oxyalkylene group having 2 to 4 carbon atoms as repeating units and that has an alkoxy group having 1 to 15 carbon atoms at one terminal, (b) an alkoxy group, (c) an alkoxyalkyl group, or (d) an alkyl group substituted or unsubstituted with the polyether group (a); an electrode for a solid electrolytic capacitor produced using the electroconductive coating composition (A); and a process for producing an electroconductive coating film comprising: applying the electroconductive coating composition (A) to a substrate and then heat-treating it.

## EFFECT OF THE INVENTION

The electroconductive coating composition of the present invention has good processability because it is superior in solubility in solvents, and it is suitable as a coating material needing electrical conductivity because it is superior in electrical conductivity and also develops only a small, if any, decrease in electrical conductivity even under high temperature conditions. Especially, it is suitable as a negative electrode material for a solid electrolytic capacitor.

## MODE FOR CARRYING OUT THE INVENTION

The electroconductive coating composition (A) of the present invention comprises a substituted polythiophene (P) and a dopant (D), said substituted polythiophene (P) having thiophene repeating units at least some of which are each a thiophene repeating unit ($\alpha$) substituted at the 3-position and/or the 4-position of its thiophene ring with (a) a polyether group that comprises 1 to 9 oxyalkylene group having 2 to 4 carbon atoms as repeating units and that has an alkoxy group having 1 to 15 carbon atoms at one terminal, (b) an alkoxy group, (c) an alkoxyalkyl group, or (d) an alkyl group substituted or unsubstituted with the polyether group (a) (in this description, also referred to as a "thiophene repeating unit ($\alpha$)"). The respective elements indicated with signs (a), (b), (c), and (d) are referred to in this description also as a polyether group (a), an alkoxy group (b), an alkoxyalkyl group (c), and an alkyl group (d), respectively.
Examples of the aforementioned polyether group (a) include polyether groups having repeating units each made up of an oxyalkylene group having 2 to 4 carbon atoms, the number of the repeating units being 1 to 9, and one terminal of the polyether group being an alkoxy group having 1 to 15 carbon atoms.
Examples of the oxyalkylene group having 2 to 4 carbon atoms include an oxyethylene group, an oxypropylene group, and oxybutylene.
Examples of the alkoxy group having 1 to 15 carbon atoms at the terminal include a methoxy group, an ethoxy group, a propoxy group, an isopropoxy group, a n-, iso-, sec- or a tert-butoxy group, a pentyloxy group, a hexyloxy group, a heptyloxy group, an octyloxy group, a 2-ethylhexyloxy group, a nonyloxy group, a decyloxy group, an undecyloxy group, a dodecyloxy group, a tridecyloxy group, a tetradecyloxy group, and a pentadecyloxy group.
Examples of the alkoxy group (b) include alkoxy group having 1 to 15 carbon atoms which are the same as those provided as examples for the aforementioned polyether group (a).
Examples of the aforementioned alkoxyalkyl group (c) include alkyl groups having 1 to 4 carbon atoms substituted with alkoxy groups having 1 to 15 carbon atoms.
Examples of the alkoxy groups having 1 to 15 carbon atoms include those provided as examples for the aforementioned polyether group (a), and examples of the alkyl group having 1 to 4 carbon atoms include a methyl group, an ethyl group, a nor iso-propyl group, and a n-, sec-, iso-, or tert-butyl group.
Examples of the alkyl group (d) that the thiophene repeating unit ($\alpha$) has include linear or branched alkyl groups having 1 to 15 carbon atoms, e.g., a methyl group, a n- or iso-propyl group, a n-, iso-, sec- or tert-butyl group, a nor iso-pentyl group, a cyclopentyl group, a n- or iso-hexyl group, a cyclohexyl group, a n- or iso-heptyl group, a n- or iso-octyl group, a 2-ethylhexyl group, a n- or iso-nonyl group, a n- or iso-decyl group, a n- or iso-undecyl group, a n- or iso-dodecyl

group, a n- or iso-tridecyl group, a n- or iso-tetradecyl group, and a n-, or iso-pentadecyl group.
The alkyl group (d) may be an alkyl group substituted with the aforementioned polyether group (a). Specifically, linear or branched alkyl groups having 1 to 15 carbon atoms substituted with the aforementioned polyether group (a) are mentioned.

One preferred from the viewpoint of electrical conductivity as the thiophene repeating unit (α) that the substituted polythiophene (P) in the present invention has is a repeating unit (α1) represented by the following general formula (1), a repeating unit (α2) represented by the following general formula (2), or a repeating unit (α3) represented by the following general formula (3).

[Chemical formula 1]

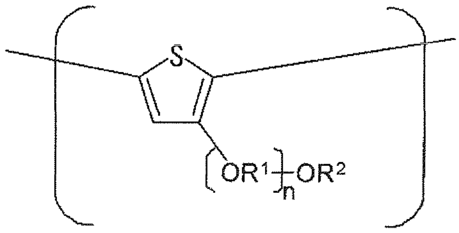

(1)

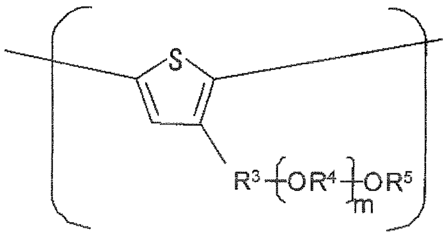

(2)

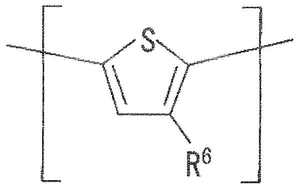

(3)

$OR^1$ and $OR^4$ in the above general formula (1) or (2) each independently represent an oxyethylene group or an oxypropylene group, and an oxyethylene group is preferred from the viewpoint of electrical conductivity.

$R^2$, $R^5$, and $R^6$ in the above general formulae (1) through (3) each independently represent a linear or branched alkyl group having 1 to 12 carbon atoms (e.g., a methyl group, a nor iso-propyl group, a n-, iso-, sec- or tert-butyl group, a n- or iso-pentyl group, a cyclopentyl group, a n- or iso-hexyl group, a cyclohexyl group, a n- or iso-heptyl group, a n- or iso-octyl group, a 2-ethylhexyl group, a n- or iso-nonyl group, a n- or iso-decyl group, a n- or iso-undecyl group, and a n-, or iso-dodecyl group).

When the below-described n is 1 or more, groups preferred as $R^2$ from the viewpoint of electrical conductivity are linear or branched alkyl groups having 1 to 6 carbon atoms and more preferably linear or branched alkyl groups having 1 to 4 carbon atoms.
When n is 0, groups preferred as $R^2$ from the viewpoint of electrical conductivity are linear or branched alkyl groups having 3 to 12 carbon atoms and more preferably linear or branched alkyl groups having 6 to 12 carbon atoms.

When the below-described m is 1 or more, groups preferred as $R^5$ from the viewpoint of electrical conductivity are linear or branched alkyl groups having 1 to 6 carbon atoms and more preferably linear or branched alkyl groups having 1 to 4 carbon atoms.
When m is 0, groups preferred as $R^5$ from the viewpoint of electrical conductivity are linear or branched alkyl groups having 3 to 12 carbon atoms and more preferably linear or branched alkyl groups having 6 to 12 carbon atoms.

Groups preferred as $R^6$ from the viewpoint of solubility in solvents and electrical conductivity are linear or branched alkyl groups having 3 to 12 carbon atoms and more preferably linear or branched alkyl groups having 6 to 12 carbon atoms.

$R^3$ in the above general formula (2) represents a linear or branched alkylene group having 1 to 4 carbon atoms (e.g., a methylene group, a 1,2- or 1,3-propylene group, and a 1,2-, 1,3-, 2,3- or 1,4-butylene group), and groups preferred from the viewpoint of solubility in solvents and electrical conductivity are linear or branched alkylene groups having 1 to 3 carbon atoms and more preferably linear or branched alkylene groups having 1 or 2 carbon atoms.

n and m in the above general formula (1) or (2) are each independently an integer of 0 to 5. From the viewpoint of solubility in solvents and electrical conductivity, n is preferably 1 to 5, more preferably 2 to 5. From the viewpoint of solubility in solvents and electrical conductivity, m is preferably 0 to 4, and m is more preferably 0 to 3.

The substituted polythiophene (P) in the present invention may consist only of the above-described thiophene repeating units ($\alpha$) or alternatively may contain thiophene repeating units that are not substituted.

From the viewpoint of solubility in solvents, the content of the above-described thiophene repeating units ($\alpha$) in the substituted polythiophene (P) is preferably 50 to 100% by weight, more preferably 60 to 100% by weight, and particularly preferably 70 to 100% by weight based on the weight of the substituted polythiophene (P).

The substituted polythiophene (P) in the present invention can be synthesized by a known method, such as anionic polymerization or oxidative polymerization of monomers corresponding to respective repeating units.

Examples of a monomer corresponding to the above-described thiophene repeating unit ($\alpha$) include thiophenes substituted with a polyether group (a), an alkoxy group (b), an alkoxyalkyl group (c) or an alkyl group (d) at the 3-position and/or the 4-position of its thiophene ring and also substituted with a halogen atom at the 2-position and 5-position.
Thiophene is mentioned as a monomer corresponding to the unsubstituted thiophene repeating unit.

From the viewpoint of coatability, the content of the substituted polythiophene (P) in the electroconductive coating composition (A) is preferably 0.1 to 20% by weight, more preferably 1.0 to 6.0% by weight based on the weight of the electroconductive coating composition (A). It is undesirable that the content of the substituted polythiophene (P) is excessively large because if so an agglomerate will be generated, resulting in deterioration of application property. It is undesirable that the content of the substituted polythiophene (P) is excessively small because if so it will become difficult to form a uniform coating film.

Examples of the dopant (D) that the electroconductive coating composition (A) of the present invention contains inorganic acids (e.g., sulfuric acid and nitric acid), halogen ions (e.g., iodine, bromine, and chlorine), halide ions (e.g., tetrafluoroboron and perchloric acid), quinone compounds [e.g., chloranilic acid, p-chloranil, p-benzoquinone, p-quinonedioxime, dichlorodicyanoquinone (DDQ), p-naphthoquinone, anthraquinone, chloroanthraquinone, and p-toluquinone), alkyl-substituted organic sulfonic acid ions (e.g., methanesulfonic acid and dodecylsulfonic acid), cyclic sulfonic acid ions (e.g., camphorsulfonic acid ion), alkyl-substituted or unsubstituted benzenemono- or benzenedi-sulfonic acid ions (e.g., benzenesulfonic acid, paratoluene sulfonic acid, dodecylbenzenesulfonic acid, and benzenedisulfonic acid), alkyl-substituted or unsubstituted ions of naphthalenesulfonic acids having 1 to 4 sulfonic acid groups (e.g., 2-naphthalenesulfonic acid and 1,7-naphthalenedisulfonic acid), an anthracenesulfonic acid ion, an anthraquinonesulfonic acid ion, alkyl-substituted or unsubstituted biphenylsulfonic acid ions (e.g., alkylbiphenylsulfonic acid and biphenyldisulfonic acid), and alkyl-substituted or unsubstituted aromatic polymeric sulfonic acid ions (e.g., polystyrenesulfonic acid and naphthalenesulfonic acid-formalin condensates).
Among these, preferred from the viewpoint of electrical conductivity are inorganic acids and quinone compounds, more preferably chloranilic acid and sulfuric acid, and particularly preferably sulfuric acid.
As to the dopant (D), a single species may be used, or alternatively, two or more species may be used in combination.

The substituted polythiophene (P), which is an electroconductive polymer, donates an electron to a dopant (D) to form a charge transfer complex together with the dopant (D).
Since such a charge transfer complex develops electrical conductivity as a carrier of electrons, the higher the concentration of the dopant (D) the better. However, if the concentration is excessively high, the electrical conductivity will deteriorate. Therefore, the used amount of the dopant (D) is preferably 5 to 300% by weight, more preferably 10 to 150% by weight relative to the substituted polythiophene (P).

The regioregularity (RR) of the substituted polythiophene (P) in the present invention is usually 50% or more, and from the viewpoint of electrical conductivity, it is more preferably 80% or more, even more preferably 90% or more.

The definition of the regioregularity (RR) in the present invention is described below.
The bond of the substituted polythiophene (P) includes four types as illustrated in the following formulas B1 through B4, i.e., a HT-HT linkages (B1), a TT-HT linkage (B2), a HT-HE linkage (B3), and a TT-HH linkage (B4). As used herein, HT is an abbreviation of head-to-tail, TT is an abbreviation of tail-to-tail, and HH is an abbreviation of head-to-head.

[Chemical formula 2]

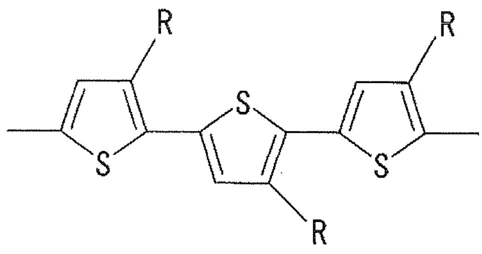

(B1)

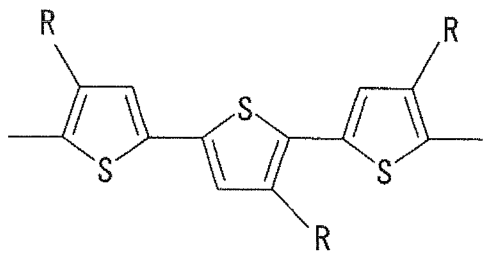

(B2)

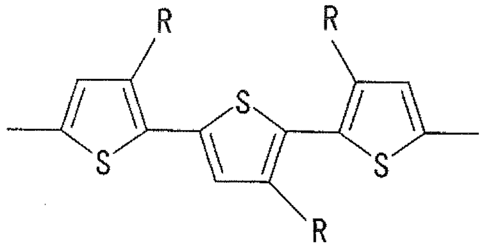

(B3)

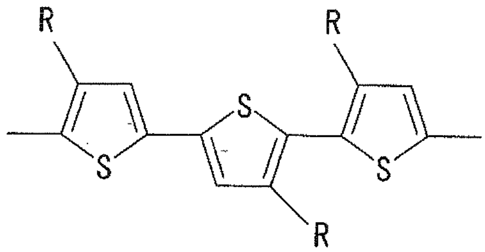

(B4)

R in the chemical formulae of the foregoing four bond types represents a polyether group (a), an alkoxy group (b), an alkoxyalkyl group (c), or an alkyl group (d).

The regioregularity (RR) in the present invention is defined by the ratio (%) of HT-HT linkages (head-to-tail-head-to-tail linkage) in a substituted polythiophene (P) and it is calculated by the following expression (1):

$$\text{Regioregularity (RR)} = B1 \times 100/(B1+B2+B3+B4) \quad (1)$$

wherein B1 represents the number of HT-HT linkages, B2 represents the number of TT-HT linkages, B3 represents the number of HT-HH linkages, and B4 represents the number of TT-HH linkages.

Specifically, since the protons that these bonds have each exhibit their unique chemical shifts (δ) in nuclear magnetic resonance spectrometry ($^1$H-NMR), it can be calculated from the integrals of the chemical shifts corresponding to the four types of bonds.

In the case of s polythiophene derivative having a repeating unit (α3) represented by general formula (3), B1:δ = 6. 98, B2:δ = 7.00, B3:δ = 7.02, and B4:δ = 7.05 are specifically exhibited. Therefore, integrals S1, S2, S3, and S4 at chemical shifts peculiar to B1, B2, B3, and B4 are calculated, and then a regioregularity (RR) is calculated by the following formula (2) using the ratio (%) of the integral S1 at the chemical shift peculiar to B1 relative to the sum total of those integrals.

$$\text{Regioregularity (RR)} = S1 \times 100/(S1+S2+S3+S4) \quad (2)$$

The electroconductive coating composition (A) of the present invention further comprises an organic solvent. In order to obtain a homogenous solution containing no precipitate, it is preferred to use as the organic solvent a good solvent of the substituted polythiophene (P) and an alcohol solvent, which is a good solvent of the dopant (D), with these solvents mixed.

Examples of the good solvent of the substituted polythiophene (P) include chlorine-containing, amide-based, ether-based, aromatic hydrocarbon-based, alcohol-based, ketone-based, or sulfur-containing solvents having 1 to 10 carbon atoms, and preferred are chloroform, methylene chloride, dimethylformamide, N-methylpyrrolidone, tetrahydrofuran (hereinafter abbreviated as THF), 1,3-dioxolane, toluene, methanol, acetone, methyl ethyl ketone, Y-butyrolactone, cyclopentanone, cyclohexanone, dimethyl sulfoxide, and their mixtures. From the viewpoint of resistance to sulfuric acid, THF, 1,3-dioxolane, methanol, and dimethyl sulfoxide are preferred.

Examples of the alcohol solvent to be used in admixture include methanol, ethanol, 2-propanol, and ethylene glycol. Among these, preferred from the viewpoint of dissolution stability are methanol, ethanol, and 2-propanol.

When producing an electroconductive coating film using the electroconductive coating composition (A) of the present invention, it is necessary to remove such a solvent. In the case of a low-boiling point solvent, the solvent is removed by spontaneous drying at normal temperature or heat drying by air circulation, whereas in the case of a high-boiling point solvent, heat drying using a vacuum dryer is preferred.

Since the electroconductive coating composition (A) of the present invention is superior in solubility in solvents and electrical conductivity, it is suitable especially as an electrode for solid electrolytic capacitors.

As described above, a capacitor having an electrode (negative electrode) produced by forming a porous coating film by etching an oxidized coating film of aluminum or the like and then forming an electroconductive polymer layer on a surface of the porous coating film has been used in a solid electrolytic capacitor that is required to exhibit a reduced impedance in a high frequency region. However, conventional methods, such as a method of applying a dispersion liquid containing a precursor monomer of an electroconductive polymer and a method of applying a solution prepared by dissolving a polypyrrole, an electroconductive polymer, in a solvent using dodecylbenzenesulfonic acid as a dopant, are problematic in that capacitor production efficency is very low and the capacitance of a capacitor cannot be increased efficiently.

In contrast to this, since the electroconductive coating composition (A) of the present invention has been dissolved in an organic solvent and is high in electrical conductivity, it is possible to impregnate a porous coating with an electroconductive polymer by a simple process, thereby efficiently increasing the capacitance of a capacitor.

By performing heating treatment after applying the electroconductive coating composition (A) of the present invention to a substrate, it is possible to obtain an electroconductive coating film that is superior in heat resistance and develops only a small, if any, decrease in electrical conductivity even under high temperature conditions.

Examples of the method for applying the electroconductive coating composition (A) to the substrate include a spin coating method, a drop casting method, a dip coating method, and a method comprising immersing the substrate in the electroconductive coating composition (A). Examples of the substrate include plastics, glass, metal, rubber, ceramics, and paper.

From the viewpoint of electrical conductivity, the thickness of the electrocondutive coating film to be formed on a substrate surface is preferably 0.05 to 100 μm, more preferably 0.1 to 50 μm. If the coating film is thinner than 0. 05 μm, sufficient electrical conductivity may not be obtained. A thickness exceeding 100 μm may cause a problem, for example, that cracking or peeling occurs easily in forming process.

In order to obtain an electroconductive coating film superior in heat resistance, the heat treating temperature is preferably 100 to 190°C, more preferably 110 to 170°C. In the case of a temperature lower than 100°C, sufficient strength and electrical conductivity may not be obtained. In the case of a temperature higher than 190°C, electrical conductivity may deteriorate.

While the heating time is chosen appropriately depending upon the heating temperature, the concentration of the substituted polythiophene (P) in the electroconductive coating composition (A) to be used for the production of a coating film, and the thickness of the coating film to be produced, it is usually 0.5 to 8 hours, preferably 1 to 4 hours. If the heating time is excessively short, the performance of the aforementioned coating film may not be sufficient.

The electroconductive coating film in the present invention is **characterized in that** it exhibits only a small, if any, decrease in electrical conductivity under high temperature conditions, and specifically, the retention rate of electrical conductivity after heating at 125°C for 240 hours in a test of heat resistance evaluation is preferably 10 to 100%, more preferably 30 to 100%.

In the present invention, the "retention rate of electrical conductivity (%) " is defined by a ratio (%) of an electrical conductivity after a heat resistance test ($\sigma_1$) to an electrical conductivity before the test ($\sigma_0$) and is expressed by the following formula.

Retention rate of electrical conductivity (%) = $\sigma_1 \times 100/\sigma_0$ wherein $\sigma_0$ represents an electrical conductivity of a coating film measured at room temperature (typically at 25°C; the same is applied hereinafter) before a heat resistance test (at 125°C, for 240 hours), and $\sigma_1$ represents an electrical conductivity of the coating film measured after cooling to room temperature after the heat resistance test.

Eelectroconductive coating films obtained by the production process of the present invention are superior in electrical conductivity and heat resistance and therefore are preferred as an electrolyte for solid electrolytic capacitors, an antistatic agent, an anticorrosive, an electroconductive paint, an electroconductive transparent electrode material, a plating primer, and so on.

EXAMPLES

The present invention is further described by means of the following examples and comparative examples, but the invention is not limited thereto. In the following, "part(s)" means "part(s) by weight".

<Production Example 1> Synthesis of

poly[3-(1,4,7,10-tetraoxaundecyl)thiophene] (P-1)

(1) Synthesis of 3-(1,4,7,10-tetraoxaundecyl) thiophene:

In 50 parts of N,N-dimethylformamide was dispersed 6.0 parts of sodium hydride (one having been dispersed in paraffin in a concentration of 60% by weight), and then 36.9 parts of triethylene glycol monomethyl ether was dropped thereto. Bubbles were generated in the reaction solution and the solution became cloudy. When the generation of bubbles was settled, 24.5 parts of 3-bromothiophene and 2.0 parts of copper(I) bromide were added in order to the reaction solution. The reaction solution was heated to 110°C and a reaction was carried out for 2 hours. After the completion of the reaction, the reaction solution was allowed to cool down to room temperature. Following addition of 50 parts of a 1M aqueous ammonium chloride solution, the mixture was moved to a separatory funnel using 50 parts of ethyl acetate and then the aqueous layer was separated. Further, the organic layer was washed twice with 30 parts of distilled water and then ethyl acetate was distilled off, so that 34.0 parts of 3-(1,4,7,10-tetraoxaundecyl)thiophene was obtained.

(2) Synthesis of 2,5-dibromo-3-(1,4,7,10-tetraoxaundecyl)thiophene:

In 40 parts of THF were dissolved 7.4 parts of the aforementioned 3-(1,4,7,10-tetraoxaundecyl)thiophene and 10.7 parts of N-bromosuccinimide, which were then reacted at room temperature for 2 hours. A precipitate was removed with a glass filter using 50 parts of ethyl acetate, and THF and ethyl acetate were then distilled off. By purifying the resulting mixture with a silica gel column, 10.5 parts of 2,5-dibromo-3-(1,4,7,10-tetraoxaundecyl)thiophene was obtained.

(3) Synthesis of poly[3-(1,4,7,10-tetraoxaundecyl)thiophene]:

After dissolving 8.1 parts of the aforementioned 2,5-dibromo-3-(1,4,7,10-tetraoxaundecyl)thiophene in 150 parts of THF, 21 parts of 1 M/L methylmagnesium bromide solution in THF was added and then a reaction was performed at 75°C for 30 minutes. To the reaction solution was added 0.1 parts of [1,3-bis(diphenylphosphino)propane]-dichloronickel (II), and then a react was performed for additional 5 hours still at 75°C. After allowing the reaction solution to cool down to room temperature, 20 parts of methanol was added. After distilling off a solvent, the reaction mixture was moved to a Soxhlet extractor and was washed in order with 150 parts of methanol and 150 parts of hexane. Finally, the residue was subjected to extraction using 150 parts of chloroform and then the solvent was distilled off, so that 3.1 parts of poly [3-(1,4,7,10-tetraoxaundecyl)thiophene] was obtained. The regioregularity calculated by the above-described method using $^{1}$H-NMR was 96.3%.

<Production Example 2>: Synthesis of poly[3-(1,4,7,10,13,16,19-heptaoxaeicosyl)thiophene] (P-2)

Experimental operations were carried out which were the same as those of Production Example 1 except for exchanging triethylene glycol monomethyl ether in (1) of Production Example 1 for hexaethylene glycol monomethyl ether (produced by Tokyo Chemical Industry Co., Ltd.), so that 2.9 parts of poly[3-(1,4,7,10,13,16,19-heptaoxaeicosyl) thiophene] having a regioregularity of 95.1% was obtained.
In exchanging triethylene glycol monomethyl ether for hexaethylene glycol monomethyl ether, the experimental operations were carried out with the amounts of the raw materials were adjusted so that the molar ratio of the reaction components and the weight ratio of the non-reaction components (solvent etc.) might become equal to those in Production Example 1. The following Production Examples 3, 4, and 6 were also performed in a similar way.

<Production Example 3>: Synthesis of poly(3-heptyloxythiophene) (P-3)

Experimental operations were carried out which were the same as those of Production Example 1 except for exchanging triethylene glycol monomethyl ether in (1) of Production Example 1 for 1-heptanol, so that 2.7 parts of poly (3-heptyloxythiophene) having a regioregularity of 95.4% was obtained.

<Production Example 4>: Synthesis of poly(3-dodecylthiophene) (P-4)

Experimental operations were carried out which were the same as those of Production Example 1 except for exchanging 2,5-dibromo-3-(1,4,7,10-tetraoxaundecyl)thiophene in (3) of Production Example 1 for 2,5-dibromo-3-dodecylthiophene (produced by Aldrich), so that 3.5 parts of poly(3-dodecylthiophene) having a regioregularity of 96.4% was obtained.

<Production Example 5>: Synthesis of poly{3-(2,5-dioxaheptyl)thiophene} (P-5)

(1) Synthesis of 3-bromomethylthiophene:

After dissolving 5 parts (50.9mmol) of 3-methylthiophene [produced by Tokyo Kasei Kogyo Co., Ltd.], 9.97 parts (56.0 mmol) of N-bromosuccinimide, and 0.12 parts (0.50 mmol) dibenzoyl peroxide [produced by Tokyo Kasei Kogyo Co., Ltd.] in 30 parts of benzene, the temperature was raised to 100°C and then a reaction was carried out for 4 hours. After the completion of the reaction, the resultant was allowed to cool down to room temperature. Following addition of 30 parts of a 1M aqueous sodium thiosulfate solution, the mixture was moved to a separatory funnel and then the aqueous layer was separated. Further, the organic layer was washed twice with 30 parts of distilled water and then benzene was distilled off, so that 6.32 parts (35.7 mmol) of 3-bromomethylthiophene was obtained.

(2) Synthesis of 3-(2,5-dioxaheptyl)thiophene:

In 15 parts of THF was dissolved 3.54 parts (39.3 mmol) of 2-ethoxyethanols, and sodium hydride (60% dispersion in paraffin) was added thereto. 6.32 parts (35.7 mmol) of the aforementioned 3-bromomethyl thiophene was dissolved in 15 parts of THF and was dropped over 2 hours. The temperature was raised thereafter to 100°C and a reaction was performed for 4 hours. After the completion of the reaction, the resultant was allowed to cool down to room temperature. Following addition of 30 parts of distilled water, the mixture was moved to a separatory funnel and then the aqueous layer was separated. Further, the organic layer was washed twice with 30 parts of distilled water and then THF was distilled off and the resulting mixture was purified with a silica gel column, so that 5.68 parts (30.5 mmol) of 3-(2,5-dioxaheptyl)thiophene was obtained.

(3) Synthesis of 2,5-dibromo-3-(2,5-dioxapentyl)thiophene:

In THF were dissolved 5.68 parts (30.5 mmol) of the aforementioned 3-(2,5-dioxaheptyl)thiophene and 11.9 parts (67.1 mmol) of N-bromosuccinimide, which were then reacted at room temperature for 2 hours. A precipitate was removed with a glass filter using 50 parts of ethyl acetate, and THF and ethyl acetate were then distilled off. By purifying the resulting mixture with a silica gel column, 8.11 parts (23.6 mmol) of 2,5-dibromo-3-(2,5-dioxaheptyl)thiophene was obtained.

(4) Synthesis of poly{3-(2,5-dioxaheptyl)thiophene} (P-5):

After dissolving 8.11 parts (23.6 mmol) of the aforementioned 2,5-dibromo-3-(2,5-dioxaheptyl)thiophene in 30 parts of THF, 25 parts of methylmagnesium bromide solution in THF was added and then a reaction was performed at 75°C for 30 minutes. To the reaction solution was added 0. it parts of [1,3-bis(diphenylphosphino)propane]-dichloronickel (II), and then a react was performed for additional 2 hours still at 75°C. After allowing the reaction solution to cool down to room temperature, 5 parts of methanol was added. The reaction mixture was moved to a Soxhlet extractor and was washed in order with 150 parts of methanol and 150 parts of hexane. Finally, the residue was subjected to extraction using 150 parts of chloroform and then the solvent was distilled off, so that 2.85 parts of poly{3-(2,5-dioxaheptyl)thiophene} having a regioregularity of 94.6% was obtained.

<Production Example 6>: Synthesis of poly{3-(2,5-dioxahexyl)thiophene} (P-6)

In the same manner as in Production Example 5 except for using 2.99 parts of 2-methoxyethanol [produced by Tokyo Kasei Kogyo Co. , Ltd.] instead of 3.54 parts of 2-ethoxyethanol, 2.40 parts of poly{3-(2,5-dioxahexyl)thiophene} having a regioregularity of 95.8% was obtained.

<Comparison Production Example 1>: Synthesis of a polyaniline aqueous dispersion

To an aqueous solution prepared by mixing 0.49 g (5.0 mmol) of sulfuric acid and 25.9 g of water was added

0.93 g (10 mmol) of aniline, and further 20.1g (30mmol) of a 30% by weight aqueous solution of poly(ammonium styrenesulfonate) having a molecular weight of 120,000 was added. The pH of the aqueous solution was 4.0. After cooling to 0°C, an aqueous solution prepared by dissolving 1.14 g (5 mmol) of ammonium persulfate in 10 g of water was dropped over 30 minutes, followed by stirring for 2 hours. During the reaction, pH was kept within a range of 2 to 5 by dropping concentrated ammonia water. After the completion of the reaction, the resultant was poured into 300 ml of acetonitrile, and the precipitate formed was washed with isopropanol, collected by filtration, and dried, so that 5.8 g of a water dispersible polyaniline composition was obtained. The resulting water dispersible polyaniline composition (2 g) was dissolved in 98 g of water to form a polyaniline aqueous dispersion.

<Examples 1 to 12>

Electroconductive coating compositions (A-1) to (A-12) of the present invention were obtained by blending the electroconductive polymers (P-1) to (P-6) obtained in Production Examples 1 to 6, the dopants and the organic solvents provided in Table 1 in the weight ratios provided in Table 1.

[Table 1]

| | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|
| | | | (A-1) | (A-2) | (A-3) | (A-4) | (A-5) | (A-6) | (A-7) | (A-8) | (A-9) | (A-10) | (A-11) | (A-12) |
| Compounded ratio (parts by weight) | Electroconductive polymer | (P-1) | 1.0 | 1.0 | 1.0 | 1.0 | - | - | 1.0 | - | - | - | - | - |
| | | (P-2) | - | - | - | - | 1.0 | 1.0 | - | 1.0 | - | - | - | - |
| | | (P-3) | - | - | - | - | - | - | - | - | 1.0 | - | - | - |
| | | (P-4) | - | - | - | - | - | - | - | - | - | 1.0 | - | - |
| | | (P-5) | - | - | - | - | - | - | - | - | - | - | 1.0 | - |
| | | (P-6) | - | - | - | - | - | - | - | - | - | - | - | 1.0 |
| | Dopant | Chloranilic acid | - | - | - | - | - | - | 0.3 | 0.3 | 0.3 | 0.3 | 0.3 | 0.3 |
| | | Sulfuric acid | 0.6 | 0.6 | 0.6 | 0.6 | 0.6 | 0.6 | - | - | - | - | - | - |
| | Organic solvent | Chloroform | - | - | - | - | - | - | 50.0 | 50.0 | 50.0 | 50.0 | 50.0 | 50.0 |
| | | Dimethylformamide | - | - | - | - | - | - | 3.7 | 3.7 | 3.7 | 3.7 | 3.7 | 3.7 |
| | | 1,3-Dioxolane | 30.0 | - | - | 30.0 | 30.0 | - | - | - | - | - | - | - |
| | | Tetrahydrofuran | - | 30.0 | | - | - | 30.0 | - | - | - | - | - | - |
| | | Cyclopentanone | - | - | 30.0 | - | - | - | - | - | - | - | - | - |
| | | Methanol | 10.0 | 10.0 | 10.0 | - | 10.0 | 10.0 | - | - | - | - | - | - |
| | | Isopropanol | - | - | - | 10.0 | - | - | - | - | - | - | - | - |

<Comparative Example 1>

The polyaniline aqueous dispersion (Q-1) obtained in Comparative Production Example 1 was used as it is as an electroconductive coating composition (A'-1) for comparison.

<Comparative Example 2>

"PEDOT/PSS" (an electroconductive polymer prepared by polymerizing Baytron-P (3,4 -ethylenedioxythiophene) produced by H.C. Starck in an aqueous high-molecular-weight polystyrene sulfonic acid solution)(Q-2), which was known as an aqueous dispersion of a polythiophene, was used as it was as an electroconductive coating composition (A'-2) for comparison.

<Evaluation Examples 1 to 12 and Comparative Evaluation Examples 1 to 2>

Evaluation of capacitor characteristic was carried out by the following methods using the electroconductive coating compositions (A-1) to (A-12) of Examples 1 to 12 and the electroconductive coating compositions (A'-1) to (A'-2) for comparison. The results are shown in Table 2.

[Method of capacitor characteristic evaluation]

(1) Preparation of dielectric film on positive electrode

An aluminum etched foil (size: 4×3.3 mm) as a positive electrode metal was immersed in a 3% by weight aqueous ammonium adipate solution, voltage was increased from 0 V to 40 V under a condition of 0.53 mA/sec by using a constant-current constant-voltage power supply, and then chemical conversion treatment was performed by applying a constant voltage of 40 V for 40 minutes, so that a dielectric film made of an oxidized coating was formed on a surface of the aluminum etched foil. This was washed in running deionized water for 10 minutes and then was dried at 105°C for 5 minutes, so that a positive electrode composed of a positive electrode metal and a dielectric film was prepared. The resulting positive electrode was immersed in the aforementioned aqueous ammonium adipate solution and an electrostatic capacitance was measured at 120 Hz. The measurement of 4.2 μF was determined as a theoretical electrostatic capacitance.

(2) Preparation of electroconductive coating film on dielectric film

Positive electrodes were dipped in the electroconductive coating compositions (A-1) to (A-12) and (A'-1) to (A'-2) and then were pulled up, followed by drying under reduced pressure at room temperature for 30 minutes, so that electrolyte layers were formed.

(3) Preparation of an electrolytic capacitor

On each of the electrolyte layers obtained above, a carbon paste ["Varniphite FU" produced by Nippon Graphite Industries, Ltd.] was applied and then dried, and thereafter a silver paste ["Everyohm ME" produced by Nippon Graphite Industries, Ltd.] was further applied, so that a negative electrode was formed. A lead was pulled out from the silver paste and a terminal was connected thereto.

(4) Measurement and evaluation

The electrostatic capacitance at 120 Hz and the internal resistance at 100 kHz of the resulting electrolytic capacitor were measured using an LCR meter, and then the occurrence of leak was evaluated on the following criteria.

<Criteria of leakage evaluation>

A case where a leak current did not decrease and neither an electrostatic capacitance nor an internal resistance was measured successfully in the measurement with the LCR meter was evaluated as "poor" and a case where a leak current decreased and both an electrostatic capacitance and an internal resistance were measured successfully was evaluated as "good".

[Table 2]

| | Electroconductive coating composition | Capacitor evaluation | | |
|---|---|---|---|---|
| | | Leak | Electrostatic capacitance (μF/120 Hz) | Internal resistance (mΩ/ 100 kHz) |
| Evaluation Example 1 | (A-1) | Good | 4 | 20 |
| Evaluation Example 2 | (A-2) | Good | 4 | 21 |
| Evaluation Example 3 | (A-3) | Good | 3.6 | 26 |
| Evaluation Example 4 | (A-4) | Good | 4.1 | 18 |
| Evaluation Example 5 | (A-5) | Good | 4.1 | 91 |
| Evaluation Example 6 | (A-6) | Good | 4.1 | 73 |
| Evaluation Example 7 | (A-7) | Good | 4 | 40 |
| Evaluation Example 8 | (A-8) | Good | 3.6 | 52 |
| Evaluation Example 9 | (A-9) | Good | 3.5 | 36 |
| Evaluation Example 10 | (A-10) | Good | 4.1 | 40 |
| Evaluation Example 11 | (A-11) | Good | 3.2 | 32 |
| Evaluation Example 12 | (A-12) | Good | 3.9 | 38 |
| Comparative Evaluation Example 1 | (A'-1) | Good | 2.5 | 7, 600 |
| Comparative Evaluation Example 2 | (A'-2) | Poor | - | - |

As shown in Table 2, the solid electrolytic capacitors using the electroconductive coating compositions of the present invention each afforded an electrostatic capacitance close to the theoretical value (4.2 μF) while maintaining a low internal resistance necessary as a capacitor. In contrast to this, the capacitor using the electroconductive coating composition of Comparative Example 1 was high in internal resistance and obtained only an electrostatic capacitance that was approximately half of the theoretical value, and the capacitor using the electroconductive coating composition of Comparative Example 2 exhibited a large leak and therefore it was unmeasurable.

<Evaluation Examples 13 to 24 and Comparative Evaluation Example 3>

Using the electroconductive coating compositions (A-1) to (A-12) of Examples 1 to 12 and the electroconductive coating compositions (A'-1) for comparison, measurement of the electrical conductivity of coating films and a heat resistance test were carried out by the following methods. The results are shown in Table 3.

[Method for measuring electrical conductivity of coating film] (1) Preparation of coating film

The electroconductive coating compositions (A-1) to (A-6) and (A'-1) were applied to glass slides (76 mm × 26 mm, 1.0 mm in thickness) by using a bar coater (No. 6) and then were dried under reduced pressure at room temperature for 30 minutes. Thereafter heating treatment was performed in a constant temperature dryer of 130°C for two hours, so that electroconductive coating films for Evaluation Examples 13 to 18 and electroconductive coating films for Comparative Evaluation Example 3 were prepared.

Moreover, electroconductive coating films for Evaluation Examples 19 to 24 were prepared in the same manner as in the above-described method except for using the electroconductive coating compositions (A-1) to (A-6) and failing to perform the heating treatment.

(2) Measurement of film thickness

The thickness of electroconductive coating films was measured by using a digital thickness meter DG-925 [manufactured by Ono Sokki Co., Ltd.].

(3) Calculation of electrical conductivity

The surface resistance of an electroconductive coating film was measured by a four-terminal method by using Loresta GP TCP-T 250 [manufactured by Mitsubishi Chemical Corporation], and an electrical conductivity was calculated by the following formula using the resulting surface resistance value and the film thickness.

$$\text{Electrical conductivity (S/cm)} = 1/\{\text{thickness (cm)} \times \text{surface resistance } (\Omega/\square)\}$$

[Method of heat resistance test]

The electroconductive coating film the surface resistance of which was measured in the above-described "Method for measuring electrical conductivity of coating film" was heated in a constant temperature dryer of 125°C continuously for 240 hours. After the heating, it was allowed to cool down to room temperature, and then a surface resistance value after heating was measured by the above-described method and an electrical conductivity was calculated. A retention rate was calculated from the electrical conductivities before and after the heat resistance test.

[Table 3]

| | Heating treatment | Electroconductive Thickness coating composition | Thickness (μm) | Electrical conductivity (S/cm) | | Retention rate of electrical conductivity (%) |
|---|---|---|---|---|---|---|
| | | | | Initial | After heat resistance test | |
| Evaluation Example 13 | Yes | (A-1) | 0.95 | 55.0 | 41 | 75 |
| Evaluation Example 14 | | (A-2) | 0.89 | 51.0 | 41 | 80 |
| Evaluation Example 15 | | (A-3) | 0.85 | 47.0 | 37 | 79 |
| Evaluation Example 16 | | (A-4) | 0.86 | 40.0 | 31 | 78 |
| Evaluation Example 17 | | (A-5) | 0.88 | 35.0 | 27 | 78 |
| Evaluation Example 18 | | (A-6) | 0.91 | 38.0 | 31 | 81 |
| Evaluation Example 19 | No | (A-1) | 0.94 | 54.0 | 28 | 52 |
| Evaluation Example 20 | | (A-2) | 0.91 | 50.0 | 26 | 51 |
| Evaluation Example 21 | | (A-3) | 0.88 | 49.0 | 24 | 49 |
| Evaluation Example 22 | | (A-4) | 0.88 | 42.0 | 20 | 48 |
| Evaluation Example 23 | | (A-5) | 0.91 | 40.0 | 18 | 45 |
| Evaluation Example 24 | | (A-6) | 0.89 | 41.0 | 18 | 44 |

(continued)

| | Heating treatment | Electroconductive Thickness coating composition | Thickness (μm) | Electrical conductivity (S/cm) | | Retention rate of electrical conductivity (%) |
|---|---|---|---|---|---|---|
| | | | | Initial | After heat resistance test | |
| Comparative Evaluation Examples 3 | Yes | (A'-1) | 0.92 | 2.0 | 0.04 | 2 |
| * conditions of heating treatment: 130°C, 2 hours | | | | | | |

Table 3 shows that coating films produced from electroconductive coating compositions of the present invention are high in electrical conductivity and also high in retention rate after a heat resistance test.
Moreover, it is also shown that by heat treating an electroconductive coating film produced from an electroconductive coating composition of the present invention, the electrical conductivity and the heat resistance of the electroconductive coating film are improved.

INDUSTRIAL APPLICABILITY

The electroconductive coating composition of the present invention is superior in solubility in solvents and high in electrical conductivity and it therefore is useful as an electroconductive coating composition. Especially, it is useful as an electrode for solid electrolytic capacitors because it is possible to impregnate a porous coating film with an electroconductive polymer by a simple process to improve a capacitance of a capacitor efficiently. Moreover, an electroconductive coating film that exhibits only a small, if any, decrease in electrical conductivity under high temperature conditions and is superior in heat resistance can be produced easily using the electroconductive coating composition of the present invention.

## Claims

1. An electroconductive coating composition (A) comprising a substituted polythiophene (P) and a dopant (D), said substituted polythiophene (P) having thiophene repeating units at least some of which are each a thiophene repeating unit (α) substituted at the 3-position and/or the 4-position of its thiophene ring with (a) a polyether group that comprises 1 to 9 oxyalkylene group having 2 to 4 carbon atoms as repeating units and that has an alkoxy group having 1 to 15 carbon atoms at one terminal, (b) an alkoxy group, (c) an alkoxyalkyl group, or (d) an alkyl group substituted or unsubstituted with the polyether group (a).

2. The electroconductive coating composition according to claim 1, wherein the thiophene repeating unit (α) is a repeating unit (α1) represented by general formula (1), a repeating unit (α2) represented by general formula (2), or a repeating unit (α3) represented by general formula (3):

[Chemical formula 1]

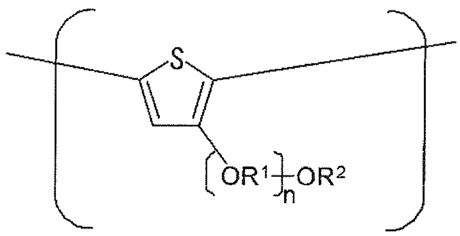

(1)

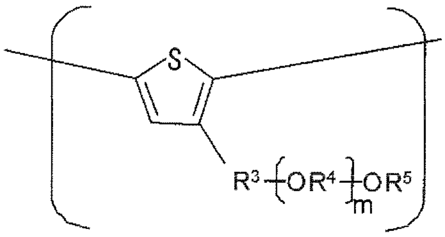

(2)

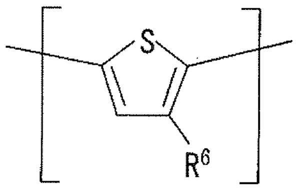

(3)

wherein $OR^1$ and $OR^4$ each independently represent an oxyethylene group or an oxypropylene group, $R^2$, $R^5$, and $R^6$ each independently represent a linear or branched alkyl group having 1 to 12 carbon atoms, $R^3$ represents a linear or branched alkylene group having 1 to 4 carbon atoms, and n and m are each independently an integer of 0 to 5.

**3.** The electroconductive coating composition according to claim 2, wherein the repeating unit ($\alpha$1) is one in which $OR^1$ in general formula (1) is an oxyethylene group, and when n is 0, $R^2$ is a linear or branched alkyl group having 3 to 12 carbon atoms and when n is 1 or more, $R^2$ is a linear or branched alkyl group having 1 to 6 carbon atoms; the repeating unit ($\alpha$2) is one in which $R^3$ in general formula (2) is an alkylene group having 1 to 3 carbon atoms, $OR^4$ is an oxyethylene group, and when m is 0, $R^5$ is a linear or branched alkyl group having 3 to 12 carbon atoms and when m is 1 or more, $R^5$ is a linear or branched alkyl group having 1 to 6 carbon atoms; and the repeating unit ($\alpha$3) is one in which $R^6$ in general formula (3) is a linear or branched alkyl group having 3 to 12 carbon atom.

**4.** The electroconductive coating composition according to any one of claims 1 to 3, wherein the content of the thiophene repeating unit ($\alpha$) in the substituted polythiophene (P) is 50 to 100% by weight of the substituted polythiophene (P).

**5.** The electroconductive coating composition according to any one of claims 1 to 3, wherein the dopant (D) is sulfuric acid or chloranilic acid.

**6.** The electroconductive coating composition according to any one of claims 1 to 3, wherein a regioregularity defined by a percentage of head-to-tail-head-to-tail linkages in the substituted polythiophene (P) is 90% or more.

**7.** An electrode for a solid electrolytic capacitor produced using the electroconductive coating composition according to any one of claims 1 to 3.

**8.** A process for producing an electroconductive coating film comprising: applying the electroconductive coating composition according to any one of claims 1 to 3 to a substrate and then heat-treating it.

**9.** The process according to claim 8, wherein the heat-treating temperature is 100°C to 190°C, and a retention rate of electrical conductivity after heating, at 125°C for 240 hours, of an electroconductive coating film obtained by the heat-treating is 10 to 100%, wherein retention rate of electrical conductivity (%) = $\sigma_1 \times 100/\sigma_0$
wherein $\sigma_0$ represents an electrical conductivity of a coating film measured at room temperature before heating at

125°C for 240 hours, and $\sigma_1$ represents an electrical conductivity of a coating film measured after cooling to room temperature after heating at 125°C for 240 hours.

## INTERNATIONAL SEARCH REPORT

International application No.
PCT/JP2010/054786

A. CLASSIFICATION OF SUBJECT MATTER
*C09D165/00*(2006.01)i, *B05D5/12*(2006.01)i, *C09D5/24*(2006.01)i, *C09D7/12*(2006.01)i

According to International Patent Classification (IPC) or to both national classification and IPC

B. FIELDS SEARCHED

Minimum documentation searched (classification system followed by classification symbols)
C09D165/00, B05D5/12, C09D5/24, C09D7/12, C08G61/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 1-161013 A (Hoechst AG.),<br>23 June 1989 (23.06.1989),<br>claims; page 5, upper right column, lines 1 to 7<br>& US 5066731 A & EP 313998 A2 | 1-5<br>6-9 |
| X<br>Y | JP 3-181477 A (Japan Carlit Co., Ltd.),<br>07 August 1991 (07.08.1991),<br>claims; page 2, upper right column, line 16 to lower left column, line 3<br>(Family: none) | 1-5<br>6-9 |
| X<br>Y | JP 3-179023 A (Hoechst AG.),<br>05 August 1991 (05.08.1991),<br>claims<br>& US 5098529 A & EP 416571 A2 | 1-5<br>6-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>14 June, 2010 (14.06.10) | Date of mailing of the international search report<br>29 June, 2010 (29.06.10) |
| Name and mailing address of the ISA/<br>Japanese Patent Office<br>Facsimile No. | Authorized officer<br><br>Telephone No. |

Form PCT/ISA/210 (second sheet) (July 2009)

INTERNATIONAL SEARCH REPORT

International application No.
PCT/JP2010/054786

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2-245019 A (Director General, Agency of Industrial Science and Technology),<br>28 September 1990 (28.09.1990),<br>claims; page 2, lower left column, lines 1 to 5<br>(Family: none) | 1-5<br>6-9 |
| X<br>Y | JP 2-22325 A (Solvay & Co.),<br>25 January 1990 (25.01.1990),<br>claims; page 4, lower right column, lines 2 to 11<br>& US 5204424 A & EP 323656 A1 | 1-5<br>6-9 |
| X<br>Y | JP 3-210326 A (Dainippon Printing Co., Ltd.),<br>13 September 1991 (13.09.1991),<br>claims; page 2, lower left column, line 9 to lower right column, line 8<br>(Family: none) | 1-5<br>6-9 |
| X<br>Y | JP 2001-207087 A (Mitsubishi Chemical Corp.),<br>31 July 2001 (31.07.2001),<br>claims; example 1<br>(Family: none) | 1-6<br>6-9 |
| Y | JP 2007-501300 A (Merck Patent GmbH),<br>25 January 2007 (25.01.2007),<br>claims<br>& US 2005/0080219 A1 & EP 1654298 A2<br>& WO 2005/014691 A2 | 6 |
| Y | JP 2003-261655 A (Xerox Corp.),<br>19 September 2003 (19.09.2003),<br>claims; paragraph [0001]<br>& US 2003/0160230 A1 & US 2004/0195566 A1<br>& US 2004/0201015 A1 & US 2005/0017311 A1<br>& US 2007/0117963 A1 & US 2007/0284572 A1<br>& EP 1329475 A1 | 6 |
| Y | JP 2006-232986 A (Mitsubishi Chemical Corp.),<br>07 September 2006 (07.09.2006),<br>claims<br>(Family: none) | 6 |
| Y | JP 6-243741 A (Fujitsu Ltd.),<br>02 September 1994 (02.09.1994),<br>claims; examples<br>(Family: none) | 7-9 |
| Y | JP 2006-257288 A (Kaneka Corp.),<br>28 September 2006 (28.09.2006),<br>claims; paragraph [0025]<br>& WO 2006/088033 A1 | 7-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 63173313 A
- JP 10507225 T
- JP 7238149 A